# EUROPEAN PATENT SPECIFICATION

(11) **EP 2 503 194 B1**
(45) Date of publication and mention of the grant of the patent: **06.09.2017**
(21) Application number: 12159530.0
(22) Date of filing: 14.03.2012
(51) Int. Cl.: F16H 57/04

(54) **Lubrication device for directing lubrication fluid to a meshing area in a gearbox**
Schmiervorrichtung zum Lenken der Schmierflüssigkeit auf einen Eingriffsbereich in einem Getriebe
Dispositif de lubrification pour diriger un fluide de lubrification vers une zone maillée dans une boîte de vitesses

(30) Priority: 21.03.2011 US 201113052813
(43) Date of publication of application: 26.09.2012
(73) Proprietor: Deere & Company, Moline, IL 61265 (US)
(72) Inventor: Voth, Danny G, Liberty, KS Kansas 67351 (US); Detrick, George W, Kansas, KS Kansas 67337 (US)
(74) Representative: Dehnhardt, Florian Christopher

(56) References cited:
- WO-A1-88/07641
- DE-A1-102008 040 268
- JP-U- 56 153 697
- US-A- 3 380 555

## Description

The present invention relates to a lubrication device for directing lubrication fluid to a meshing area in a gearbox.

Power transfer devices, such as a transmission or a pump drive gearbox typically lubricate the gears by at least one of the gears being partially submerged in a reservoir of lubricating oil, causing the oil to be splashed about the interior portions of a housing of the gearbox. There can even be protrusions from portions of the gear to cause more oil to splash about the interior of the housing of the gearbox. This is a random type of lubrication that has been utilized in many types of transmissions with the assumption that the lubrication will eventually get to the needed places by it being randomly splashed about the interior of the gearbox and onto the moving parts therein.

Broadly, a gearbox can be thought of as an arrangement that converts rotational speed and torque into another speed and torque and is often utilized in vehicles powered by an engine that provides a rotational torque source of power where the gearbox alters the speed and torque output to a desired level. Gearboxes are also used in a wide variety of stationary applications such as wind turbines. Gearboxes are also used in agricultural, industrial, forestry, construction, mining, as well as automotive equipment. Gearboxes can be thought of as a simple type of transmission often used to reduce speed or provide a change in direction of the rotating power. Usually, the distinction is that a gearbox has a gear ratio that does not change during use and is fixed at the time the gearbox is constructed. In contrast to the construct of a gearbox, a transmission has the capacity for different gear ratio selections.

The lubrication of a gearbox can be impacted by the orientation of the gearbox as well as the temperature and torque being applied thereto. Gearboxes can also be dry sumped, having an external pump and external reservoir for lubrication oil.

DE 10 2008 040 268 A1 discloses a device having a gear wheel of smaller diameter and another gear wheel of larger diameter. An oil injection line has two nozzles. One of these nozzles is aligned tangentially to the pitch circle of said gear wheels.

JP 56-153697 U discloses a lubrication device comprising a spray nozzle.

US 3380555 A discloses a lubrication device comprising a tube with an orifice which delivers a jet of oil through a central opening of a dam into a spline area.

What is needed in the art is a system to more efficiently lubricate the gears in a gearbox to allow for the more efficient running of the gearbox at a lower temperature. This need is solved by a lubrication device according to claim 1. Dependent claims 2-7 concern particular embodiments of the invention of claim 1. For a complete understanding of the objects, techniques, and structure of the invention reference should be made to the following detailed description and accompanying drawings, wherein similar components are designated by identical reference numerals:
- Fig. 1: is a side view of a vehicle using a gearbox comprising a lubrication device according to the present invention,
- Fig. 2: is a partial cross sectional perspective view of a gearbox having a gearbox housing as used in the vehicle of Fig. 1, and
- Fig. 3: is a schematical, partially sectioned view of the gearbox housing of Fig 2.

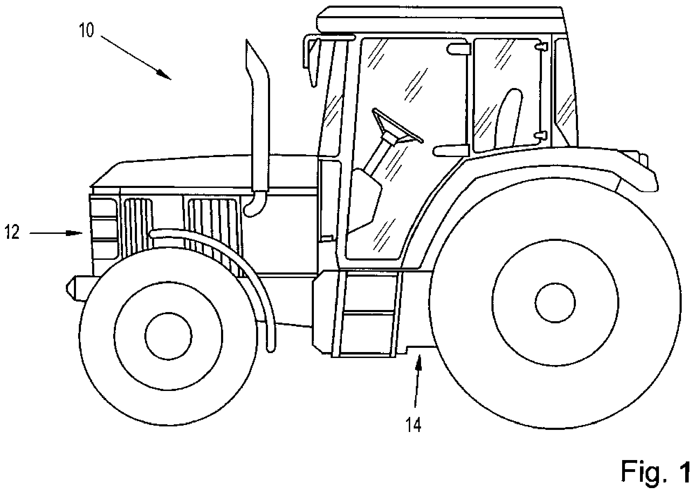

Referring now to the drawings, and more particularly to Fig. 1, there is shown a vehicle 10 having a power generating device 12 formed by a diesel engine that provides mechanical rotary motion to a power transfer device or gearbox 14 having rotating gears therein for the purpose of converting rotational speed and torque into another speed and torque. Vehicle 10 is shown as an agricultural vehicle, although it is recognized that the invention may be also incorporated into any other vehicle, such as a construction, forestry, industrial, and mining vehicle.

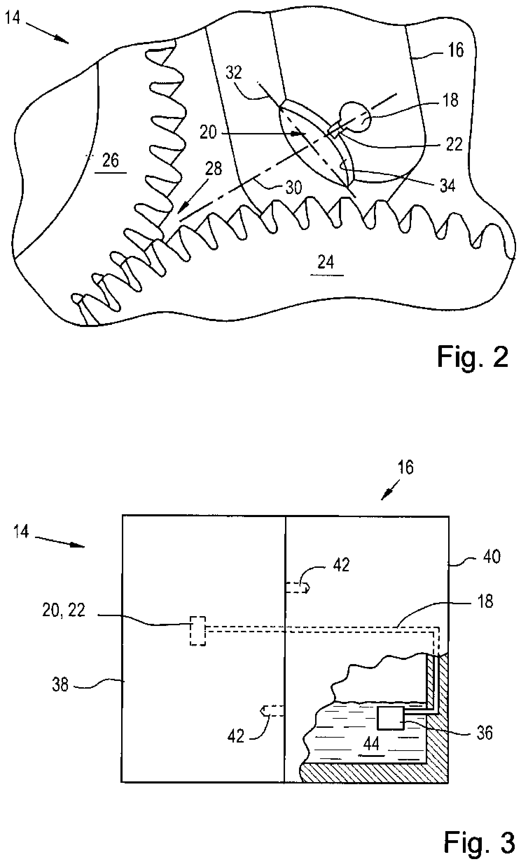

Referring to Figs. 2 and 3, the gearbox 14 includes gearbox housing 16, having a lubrication passage 18 therein. Lubrication passage 18 is in fluid communication with lubrication slot 20 and spray nozzle 22. Lubrication fluid (i.e., lubrication oil) passing through lubrication passage 18 then flows first through spray nozzle 22 and then through lubrication slot 20 as it is directed towards first gear 24 and second gear 26 and, more particularly, to meshing area 28, which is an area in which first gear 24 and second gear 26 mesh together. Lubrication slot 20 and spray nozzle 22 are generally oriented along tangent line 30. Tangent line 30 is tangent to both first and second gears 24 and 26 where they mesh in meshing area 28. Lubrication fluid passing through lubrication passage 18 is directed by spray nozzle 22 through lubrication slot 20, with lubrication slot 20 further orienting the pattern and direction of the lubrication fluid as it passes toward meshing area 28. The lubrication fluid is advantageously placed into meshing area 28 to enhance the efficiency of the power transfer between first and second gears 24 and 26. Although only one set of first and second gears 24 and 26 is illustrated, which have, in this case, parallel axes of rotation, other types of gears as well as a number of gears are contemplated with more than one lubrication slot 20 and spray nozzle 22 directed to appropriate meshing areas.

Lubrication slot 20 has a long axis 32 that is generally perpendicular to the parallel axes of rotation of first and second gears 24 and 26. Long axis 32 may generally intersect tangent line 30, illustrating a symmetry regarding the orientation and positioning of lubrication slot 20. Spray nozzle 22 may simply be a machined opening through part of gearbox housing 16 connecting lubrication passage 18 with lubrication slot 20. As lubrication fluid flows through spray nozzle 22, it may be reoriented by lubrication slot 20 to provide a particular spray pattern in meshing area 28 with additional lubrication fluid arriving on areas of first and second gears 24 and 26 prior to their meshing. In Fig. 2, it is anticipated that first gear 24 is moving in a counterclockwise direction and second gear 26 is moving in a clockwise direction so that meshing area 28 is receiving lubrication fluid before first and second gears 24 and 26 come into contact with each other.

Lubrication slot 20 additionally has a generally curved surface 34 that may shaped having a fixed radius, although other shapes are also contemplated. The surface illustrated in Fig. 2 in which lubrication passage 18 is shown may be a cross sectional area or may be along a parting line as shown in Fig. 3 that exists between a first and second portion 38 and 40 of gearbox housing 16. If lubrication slot 20 that is to be machined is located along the parting line then only one of the first or second portions 28 or 40 of gearbox housing 16 may be machined. In the schematical illustration of Fig. 3, lubrication slot 20 and spray nozzle 22 are schematically shown as being a part of first portion 38 while lubrication passage 18 exists all of the way from a lubrication pressurization device 36 through both first and second portions 38 and 40 of gearbox housing 16. In order to ensure that lubrication passage 18 is continuous from first portion 38 through second portion 40, alignment features 42 in the form of pins and corresponding cavities provide for the alignment of first and second portions 38 and 40. Lubrication fluid is illustrated as existing within an integrated reservoir 44 inside gearbox housing 16, although in other configurations, such as a dry sump, lubrication pressurization device 36, which may be a pump, is located outside of gearbox housing 16 along with lubrication fluid being held in a separate reservoir.

Advantageously, gearbox housing 16 is configured so that first and second portions 38 and 40 join together at a specific location and have a machined lubrication slot 20 and/or a spray nozzle 22, which directs lubrication fluid into meshing area 28. Lubrication fluid is supplied to spray nozzle 22 and lubrication slot 20 by the machined lubrication passage 18 in gearbox housing 16, which is a part of a lubrication device, wherein the lubrication fluid flows from integrated reservoir 44 through lubrication pressurization device 36, through lubrication passage 18, through spray nozzle 22, and then through lubrication slot 20 into meshing area 28 where the lubrication fluid once disbursed will eventually find its way back to the integrated reservoir 44 to complete the circuit again.

The present invention advantageously is cost effective, utilizing elements of the gearbox housing 16 and not requiring the insertion of new parts for the directing of the lubrication fluid to the meshing area 28 of the first and second gears 24 and 26.

## Claims

1. A lubrication device for directing lubrication fluid to a meshing area in a gearbox, the lubrication device comprising a lubrication passage (18); and a lubrication slot (20) and a spray nozzle (22) in fluid communication with said lubrication passage (18), wherein said lubrication slot (20) and said spray nozzle (22) directing lubrication fluid flowing therethrough towards a meshing area (28) of a first and second gear (24, 26), **characterized in that** said lubrication slot (20) and said spray nozzle (22) being generally aligned with a tangent line (30) extending from where said first and second gear (24, 26) mesh, wherein said spray nozzle (22) is positioned prior to said lubrication slot (20) in a direction of flow of lubrication fluid therethrough.

2. The lubrication device according to claim 1, **characterized in that** said lubrication slot (20) has a long axis (32) that is generally oriented perpendicular to an axis of rotation of said first gear (24).

3. The lubrication device according to one of claims 1 or 2, **characterized in that** said lubrication slot (20) has a generally curved surface (34) that intersects with said spray nozzle (22).

4. The lubrication device according to one of claims 1 to 3, **characterized by** a lubrication pressurization device (36) that feeds lubrication fluid into said lubrication passage (18).

5. Gearbox housing (16) comprising a lubrication device according to one of claims 1 to 4, **characterized in that** said gearbox housing (16) includes said lubrication slot (20) and/or said spray nozzle (22).

6. Gearbox housing (16) according to claim 5, **characterized in that** said gearbox housing (16) having a first and second portion (38, 40) being indexed together thereby aligning said lubrication passage (18) passing through both said first and second portion (38, 40).

7. A vehicle, comprising a power generating device (12); and a power transfer device (14) coupled to said power generating device (12), **characterized by** a lubrication device according to one of claims 1 to 6.

## Patentansprüche

1. Schmiervorrichtung zum Lenken einer Schmierflüssigkeit zu einem Eingriffsbereich in einem Getriebe, wobei die Schmiervorrichtung einen Schmierkanal (18) sowie einen Schmierschlitz (20) und eine Sprühdüse (22) in Flüssigkeitsverbindung mit dem Schmierkanal (18) umfasst, wobei der Schmierschlitz (20) und die Sprühdüse (22) eine durch diese strömende Schmierflüssigkeit zu einem Eingriffsbereich (28) eines ersten und eines zweiten Zahnrads (24, 26) leiten, **dadurch gekennzeichnet, dass** der Schmierschlitz (20) und die Sprühdüse (22) im Allgemeinen an einer tangentialen Linie (30) ausgerichtet sind, die sich von dem Punkt erstreckt, an dem das erste und das zweite Zahnrad (24, 26) ineinander eingreifen, wobei die Sprühdüse (22) in einer Strömungsrichtung der durch diese strömenden Schmierflüssigkeit vor dem Schmierschlitz (20) positioniert ist.

2. Schmiervorrichtung nach Anspruch 1, **dadurch gekennzeichnet, dass** der Schmierschlitz (20) eine Längsachse (32) aufweist, die im Allgemeinen rechtwinklig zu einer Drehachse des ersten Zahnrads (24) ausgerichtet ist.

3. Schmiervorrichtung nach einem der Ansprüche 1 oder 2, **dadurch gekennzeichnet, dass** der Schmierschlitz (20) eine im Allgemeinen gekrümmte Oberfläche (34) aufweist, die die Sprühdüse (22) schneidet.

4. Schmiervorrichtung nach einem der Ansprüche 1 bis 3, **gekennzeichnet durch** eine Schmierbeaufschlagungsvorrichtung (36), die Schmierflüssigkeit in den Schmierkanal (18) fördert.

5. Getriebegehäuse (16), umfassend eine Schmiervorrichtung nach einem der Ansprüche 1 bis 4, **dadurch gekennzeichnet, dass** das Getriebegehäuse (16) den Schmierschlitz (20) und/oder die Sprühdüse (22) umfasst.

6. Getriebegehäuse (16) nach Anspruch 5, **dadurch gekennzeichnet, dass** das Getriebegehäuse (16) einen ersten und einen zweiten Abschnitt (38, 40) aufweist, die miteinander getaktet werden und dadurch den Schmierkanal (18), der sowohl durch den ersten als auch den zweiten Abschnitt (38, 40) führt, ausrichten.

7. Fahrzeug, umfassend eine Stromerzeugungsvorrichtung (12) und eine Stromübertragungsvorrichtung (14), die an die Stromerzeugungsvorrichtung (12) gekoppelt ist, **gekennzeichnet durch** eine Schmiervorrichtung nach einem der Ansprüche 1 bis 6.

## Revendications

1. Dispositif de lubrification pour diriger le fluide de lubrification vers une zone maillée dans une boîte de vitesses, le dispositif de lubrification comprenant un passage de lubrification (18) ; et une fente de lubrification (20) et une buse de pulvérisation (22) en communication fluide avec ledit passage de lubrification (18), dans lequel ladite fente de lubrification (20) et ladite buse de pulvérisation (22) dirigent l'écoulement de lubrification s'écoulant à travers en direction d'une zone maillée (28) d'un premier et second engrenage (24, 26), **caractérisé en ce que** ladite fente de lubrification (20) et ladite buse de pulvérisation (22) sont généralement alignées avec une ligne tangente (30) s'étendant hors de là où ledit premier et second engrenage (24, 26) s'engrènent, dans lequel ladite buse de pulvérisation (22) est positionnée avant ladite fente de lubrification (20) dans une direction d'écoulement de fluide de lubrification traversant.

2. Dispositif de lubrification selon la revendication 1, **caractérisé en ce que** ladite fente de lubrification (20) a un axe long (32) généralement orienté perpendiculairement à un axe de rotation dudit premier engrenage (24).

3. Dispositif de lubrification selon l'une quelconque des revendications 1 ou 2, **caractérisé en ce que** ladite fente de lubrification (20) a une surface (34) généralement incurvée rencontrant ladite buse de pulvérisation (22).

4. Dispositif de lubrification selon l'une quelconque des revendications 1 à 3, **caractérisé par** un dispositif pressurisation de lubrification (36) amenant du fluide de lubrification dans ledit passage de lubrification (18) .

5. Carter de boîte de vitesses (16) comprenant un dispositif de lubrification selon l'une quelconque des revendications 1 à 4, **caractérisé en ce que** ledit carter de boîte de vitesses (16) comprend ladite fente de lubrification (20) et/ou ladite buse de pulvérisation (22).

6. Carter de boîte de vitesses (16) selon la revendication 5, **caractérisé en ce que** ledit carter de boîte de vitesses (16) a une première et seconde partie (38, 40) indexées ensemble, alignant ainsi ledit passage de lubrification (18) traversant tant ladite première et seconde partie (38, 40).

7. Véhicule, comprenant un dispositif de génération de puissance (12) ; et un dispositif de transfert de puissance (14) couplé audit dispositif de génération de puissance (12), **caractérisé par** un dispositif de lubrification selon l'une quelconque des revendications 1 à 6.
